**Europäisches Patentamt**

**European Patent Office**

**Office européen des brevets**

(19)

(11) Veröffentlichungsnummer: **0 169 520 B1**

(12) **EUROPÄISCHE PATENTSCHRIFT**

(45) Veröffentlichungstag der Patentschrift:
**18.01.89**

(51) Int. Cl.⁴: **H 04 B 1/66**

(21) Anmeldenummer: **85109101.7**

(22) Anmeldetag: **20.07.85**

(54) **Empfänger für bandgespreizte Signale.**

(30) Priorität: **23.07.84 DE 3427058**

(43) Veröffentlichungstag der Anmeldung:
**29.01.86 Patentblatt 86/5**

(45) Bekanntmachung des Hinweises auf die Patenterteilung:
**18.01.89 Patentblatt 89/3**

(84) Benannte Vertragsstaaten:
**AT BE CH DE FR GB IT LI NL SE**

(56) Entgegenhaltungen:
**US-A- 4 221 005**

**IEEE TRANSACTIONS ON COMMUNICATIONS, vol. COM-32, no. 4, April 1984, pages 354-361, IEEE, New York, US; A.BAIER: "A low-cost digital matched filter for arbitrary constant-envelope spread-spectrum waveforms**
**PROCEEDINGS OF THE CONFERENCE ON MICROPROCESSORS IN AUTOMATION AND COMMUNICATIONS, 19th-22nd September 1978, Canterbury, pages 449-455, Published by the IERE, London, GB; A.C.DAVIES et al.: "Synchronisation of a spread-spectrum receiver by a microprocessor-control system"**

(73) Patentinhaber: **Standard Elektrik Lorenz Aktiengesellschaft, Lorenzstrasse 10, D-7000 Stuttgart 40 (DE)**

(72) Erfinder: **Beier, Wolfgang, Alte Renninger Strasse 123, D-7257 Weil der Stadt (DE)**

(74) Vertreter: **Schmidt, Werner, Dipl.-Phys. et al, Standard Elektrik Lorenz AG Patent- und Lizenzwesen Postfach 30 09 29, D-7000 Stuttgart 30 (DE)**

ACTORUM AG

## Beschreibung

Die Erfindung geht aus von einem Empfänger für bandgespreizte Signale. Bandgespreizte Signale sind Signale, bei denen ein hochfrequenter Träger mit einem pseudo-statistischen Kode (nachfolgend PRC genannt) kodiert ist. Dieser Kode zur Spektrumsspreizung ist mit einem Modulationssignal, das zur Datenübertragung dient, moduliert. Das Modulationssignal ist häufig ebenfalls ein digitales Signal. In diesem Fall ist also einem ersten digitalen Signal – dem PRC – zur Datenübertragung ein weiteres digitales Signal überlagert. Die Taktfrequenz für die beiden digitalen Signale sind im allgemeinen stark unterschiedlich.

Im Empfangsgerät ist der PRC, der sendeseitig zur Bandspreizung verwendet wird, gespeichert. Weiterhin ist im Empfangsgerät ein Taktgenerator vorhanden, der ein Taktsignal abgibt, das das Auslesen des Kodes aus einem Speicher steuert. Die Phase des Taktsignals muss so geregelt werden, dass der im Empfänger gespeicherte PRC und der PRC des empfangenen Signals zeitlich koinzident auftreten. Aus der Phasenverschiebung zwischen empfangenem und gespeichertem PRC kann die Entfernung des Empfängers von der Sendestation ermittelt werden.

Systeme, bei denen bandgespreizte Signale verwendet werden, sind beispielsweise das JTIDS (Joint Tactical Information Distribution System) und das GPS (Global Positioning System).

Das GPS ist in Navigation, Journal of the Institute of Navigation, Band 25, Nr. 2, Sommer 1978, Seiten 121 bis 146, «GPS Signal Structure and Performance Characteristics» von J.J. Spilker jr. beschrieben.

Auf den Seiten 139 bis 146 der GPS-Veröffentlichung sind Empfänger für bandgespreizte Signale beschrieben. Die Realisierung dieser Empfänger ist aber sehr aufwendig.

Aufgabe der Erfindung ist es, einen Empfänger für bandgespreizte Signale anzugeben, der technisch einfach zu realisieren ist.

Die Lösung dieser Aufgabe erfolgt mit den im Anspruch 1 angegebenen Mitteln. Vorteilhafte Weiterbildungen sind den Unteransprüchen zu entnehmen.

Die Realisierung des neuen Empfängers ermöglicht einen sehr hohen Integrationsgrad.

Ein grosser Teil der Funktionen kann von einem Rechner durchgeführt werden. Bei der neuen Lösung erfordert die Realisierung des HF-Teils nur einen geringen Aufwand. Insbesondere sind keine Frequenz- und Amplitudenregelungen erforderlich. Der Empfänger kann auf einfache Weise so erweitert werden, dass er im Zeitmultiplex mit mehreren Satelliten Verbindung aufnehmen kann, was insbesondere dann erforderlich ist, wenn er als GPS-Empfänger realisiert ist. Der hierzu zusätzlich erforderliche Aufwand ist sehr gering.

Die Erfindung wird anhand der Zeichnungen beispielsweise näher erläutert. Es zeigt:

Fig 1a bis c Diagramme zur Erläuterung eines bandgespreizten Signals,
Fig. 2 ein Blockschaltbild des neuen Empfängers, und
Fig. 3a bis d Diagramme von Signalen zur Erläuterung der Funktionsweise des Empfängers.

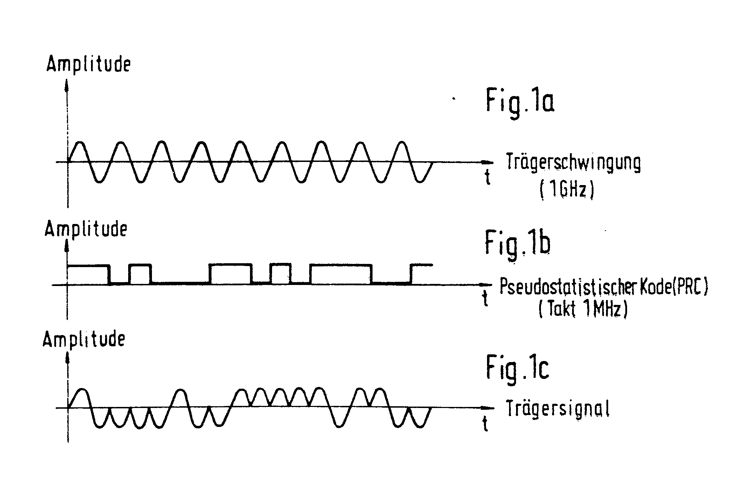

Zur Erzeugung eines bandgespreizten Signals wird eine hochfrequente Trägerschwingung (Fig. 1a), die beispielsweise eine Frequenz von 1 GHz hat, mit einem pseudostatistischen Kode PRC (Fig. 1b), der aus den Signalen «0» und «1» besteht und eine Taktfrequenz von beispielsweise 1 MHz hat, moduliert. Abhängig davon, ob der PRC eine «0» oder «1» aufweist, bleibt die Phase der Trägerschwingung unverändert oder sie wird um 180° verschoben. Das so erzeugte Signal (Fig. 1c) wird nachfolgend als Trägersignal bezeichnet.

Dieses Signal kann bei dem GPS zur Entfernungsmessung verwendet werden.

Regelt man die Phase des im Empfänger gespeicherten PRC so, dass die beiden PRC wieder zeitlich koinzident sind, kann in an sich bekannter Weise die Entfernung ermittelt werden.

Falls mittels des bandgespreizten Signals Daten übertragen werden sollen, dann wird hierzu das Trägersignal mit dem die Daten enthaltenden Signal moduliert. Das Modulationssignal kann ebenfalls ein digitales Signal sein. In diesem Fall wird dem digitalen PRC ein weiteres digitales Signal überlagert. Die Taktfrequenzen der beiden digitalen Signale sollen sich vorzugsweise deutlich voneinander unterscheiden. Taktfrequenzen von 1 MHz und 50 Hz sind geeignete Werte.

Ein bekanntes System, bei dem bandgespreizte Signale verwendet werden, ist, wie bereits erwähnt, das GPS. Bei dem GPS erfolgt sowohl eine Entfernungsmessung als auch eine Datenübertragung.

In einem bekannten GPS-Empfänger, wie er beispielsweise aus der zitierten Literaturstelle bekannt ist, erfolgt eine Regelung der Phasenlage des gespeicherten PRC. Hierzu ist beispielsweise eine sogenannte τ-dither-Regelschleife oder eine early/late-Regelschleife vorgesehen. Weiterhin ist eine Costas-Regelschleife vorgesehen, in der I- und Q-Anteile des modulierten Trägersignals (nach geeigneter Signalverarbeitung; z.B. Umsetzen in die ZF-Lage) gebildet werden und in der das Modulationssignal zurückgewonnen wird.

Bei dem neuen Empfänger sind die Regelkriterien dieselben wie bei einem bekannten Empfänger, jedoch unterscheidet er sich von den bekannten wesentlich bei seiner Realisierung. Da die Regelkriterien an sich bekannt sind, wird hierauf in der nachfolgenden Beschreibung nicht näher eingegangen.

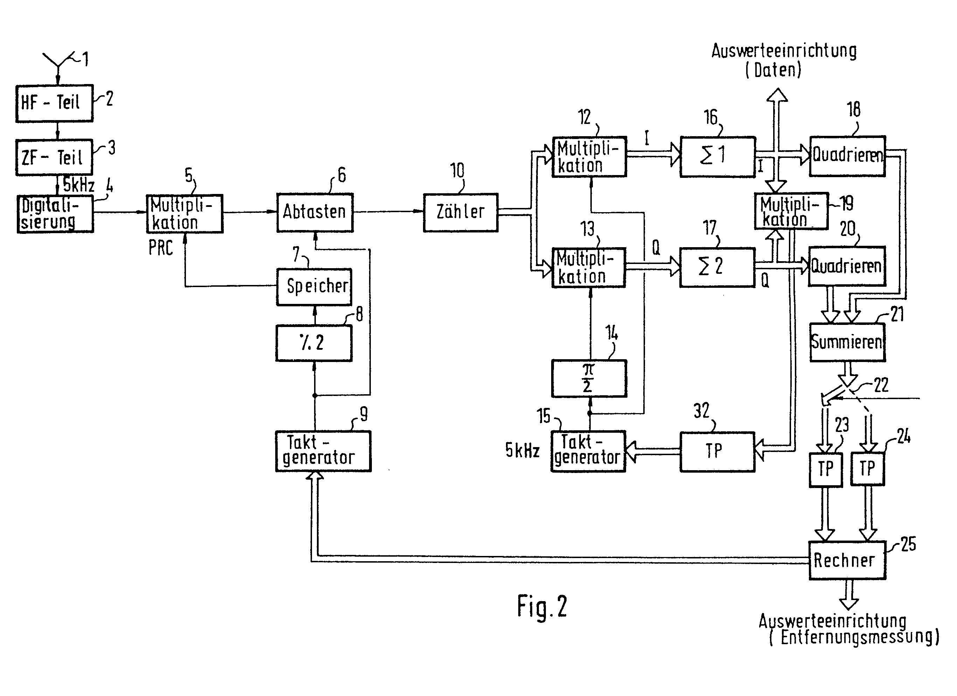

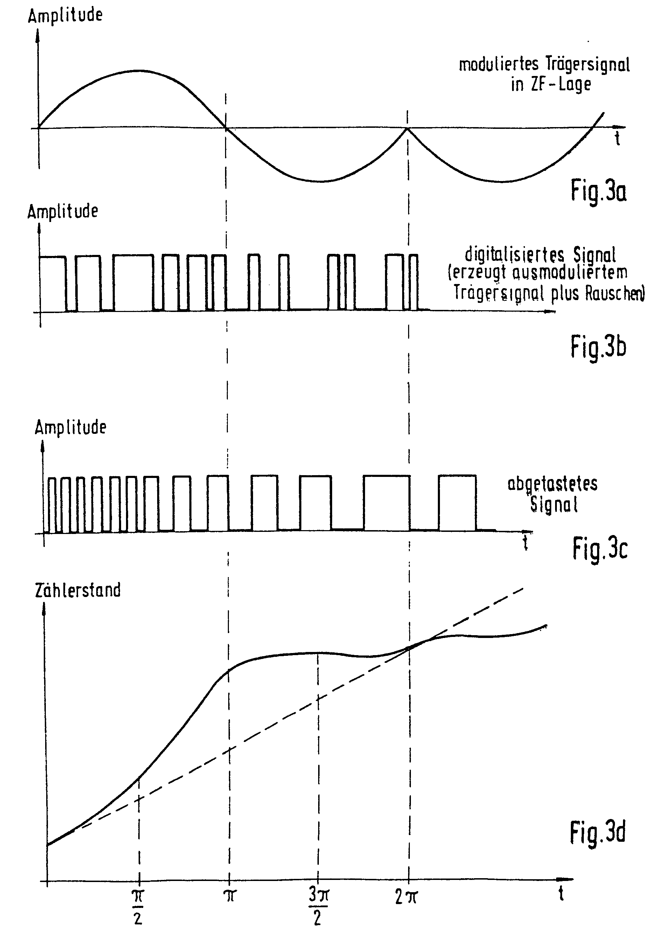

Die Beschreibung erfolgt nachfolgend anhand der Fig. 2 und 3. Das Signal wird von einer Antenne 1 empfangen und einem HF-Teil 2 zugeführt. In einem diesem nachgeschalteten ZF-Teil 3 erfolgt eine Frequenzumsetzung auf 5 kHz. Die ZF-Frequenz ist so gewählt, dass sie auch dann noch ungleich null ist, wenn die maximal zu erwartende Dopplerverschiebung auftritt. Das ZF-Signal wird in einer Digitalisierungsschaltung 4 digitalisiert, und zwar so, dass das digitale Signal den Wert «1» hat, wenn ein Schwellwert überschritten wird, und dass es den Wert «0» hat, wenn dieser nicht überschritten wird.

Als möglicher Schwellwert ist die Amplitude null geeignet.

Das empfangene und mit den Daten modulierte Trägersignal ist von einem Rauschsignal überlagert, dessen Amplitude um ca. 20 dB über der des modulierten Trägersignals liegt. Ist kein Trägersignal vorhanden, dann ist die Anzahl der «0» und «1» im digitalisierten Signal gleich. Dieses digitalisierte Signal wird in einer Multiplikationseinrichtung 5 mit dem PRC multipliziert und das so erzeugte Signal wird in einer Abtasteinrichtung 6 abgetastet und zwar mit der doppelten Frequenz, mit der der PRC aus dem Speicher ausgelesen wird. Das durch Abtastung erzeugte Signal ist in der Fig. 3c dargestellt.

Das Signal weist nach der Multiplikationseinrichtung 5 dann keine Gleichverteilung der «0» und «1» mehr auf, wenn das Trägersignal, mit oder ohne Modulationssignal zur Datenübertragung, vorhanden ist. Die Verteilung der Häufigkeit der «0» und «1» ändert sich dann mit der ZF-Frequenz des Trägersignals (Fig. 3a und 3b), d.h. mit 5 kHz, wenn das empfangene Signal keiner Dopplerverschiebung unterworfen ist, oder mit einer Frequenz zwischen 500 Hz und 9,5 kHz bei den zu erwartenden Dopplerfrequenzen.

Das durch Abtasten erzeugte Signal wird einem Zähler 10 zugeführt. Falls kein Trägersignal vorhanden ist, nimmt der Zählerstand – wie in der Fig. 3d gestrichelt dargestellt – linear zu, während dann, wenn ein Trägersignal, mit oder ohne Modulationssignal, vorhanden ist, der zeitliche Verlauf (in der Fig. 3d durch ausgezogene Linie dargestellt) des Zählerstandes eine Linie ergibt, deren Steigung abwechselnd grösser und kleiner als diejenige der gestrichelten Linie ist. Diese Zählerstände werden kontinuierlich zwei Multiplikationseinrichtungen 12 und 13 zugeführt. Diese Multiplikationseinrichtungen erhalten jeweils ein in einem Taktgenerator 15 erzeugtes Signal, das aus einer regelmässigen Folge von «+1» und «−1» besteht. Die Taktfrequenz ist gleich der ZF-Frequenz, d.h. in ihr ist – soweit vorhanden – die Dopplerverschiebung enthalten. Das Signal für die Modulationseinrichtung 13 ist gegenüber dem Signal für die Multiplikationseinrichtung 12 um eine viertel Periode des ZF-Signals verschoben. Die Ausgangssignale der beiden Multiplikationseinrichtungen entsprechen den erwähnten I- und Q-Anteilen der Signale wie sie auch bei den bekannten Empfängern erzeugt werden und diese werden auch hier bei dem neuen Empfänger zur Erzeugung von Regelsignalen verwendet.

In Summierschaltungen 16 und 17 wird jeweils für jede Periode des im Taktgenerator 15 erzeugten Taktsignals je ein Summenwert gebildet, und zwar die Summen

$$I = -Z(O) + 2Z(\pi) - Z(2\pi) \text{ und}$$

$$Q = -Z(O) + 2Z\left(\frac{\pi}{2}\right) - 2Z\left(\frac{3\pi}{2}\right) + Z(2\pi),$$

wobei die Summanden jeweils die Zählerstände zu den in den Klammern angegebenen Zeitpunkten sind. In der Fig. 2 sind die Steuerleitungen, die gewährleisten, dass die Zählerstände zu den gewünschten Zeitpunkten weiterverarbeitet werden, nicht dargestellt, da es fachmännisches Wissen ist, die anhand der Fig. 2 dargestellte Schaltung bei Kenntnis ihrer Funktion entsprechend zu ergänzen.

In einer Multiplikationseinrichtung 19 werden die Summen I und Q miteinander multipliziert und die durch die Multiplikation erzeugten Werte werden einem digitalen Tiefpass 32 zugeführt. Das Ausgangssignal dieses Tiefpasses 32 regelt die Frequenz und die Phase des Taktgenerators 15 so, dass dessen Ausgangssignal gleichphasig und gleichfrequent zu dem in die ZF-Lage umgesetzten Trägersignal ist. Durch die Multiplikationseinrichtungen 12, 13, 19, die Summierschaltungen 16, 17, den Tiefpass 32, den Taktgenerator 15 und die Phasenverschiebungseinrichtung 14 wird eine Costas-Regelschleife gebildet. Im eingeregelten Zustand gibt die Folge der von der Summierschaltung 16 abgegebenen Zahlenwerte I das Modulationssignal wieder, aus dem in an sich bekannter Weise in einer (nicht dargestellten) Auswerteeinrichtung die mittels des Modulationssignals übertragenen Daten gewonnen werden.

Die Werte I und Q werden nicht nur der Multiplikationsschaltung 19, sondern auch Quadrierschaltungen 18 und 20 zugeführt, in denen diese Werte jeweils quadriert werden. Die Quadrate dieser Werte werden in einer Summierschaltung 21 summiert und die Summenwerte, die ein Abbild der Amplitude des Trägersignals sind, werden alternierend (22) einem ersten 23 und einem zweiten 24 digitalen Tiefpass zugeführt. Das Umschalten erfolgt in dem Takt, mit dem die zeitliche Lage des Auslesens des PRC aus dem Speicher 7 umgeschaltet wird (Dither-Frequenz; 125 Hz). Die Ausgangssignale der Tiefpässe 23, 24 werden einem Rechner 25 zugeführt, in dem die Summen und die Differenzen dieser Werte berechnet werden. Daraus wird in an sich bekannter Weise ein Regelsignal ermittelt, das die Phase des in einem Taktgenerator 9 erzeugten Taktsignals, das (nach Teilung des Taktes durch zwei in einem Teiler 8) das Auslesen des PRC aus dem Speicher 7 steuert. Das Taktsignal des Taktgenerators 9 ist ausserdem das Taktsignal für die Abtastschaltung 6. Die Phasenregelung erfolgt so, dass der im Empfänger gespeicherte PRC dieselbe Phasenlage wie der PRC des empfangenen Signals aufweist. Die zeitliche Lage des PRC, bezogen auf eine Referenzzeit, ist proportional zur Entfernung des Empfängers zur Sendestation und wird deshalb ebenfalls zu der nicht dargestellten Auswerteeinrichtung geführt.

Der Taktgenerator 9, der Teiler 8, der Speicher 7, die Abtasteinrichtung 6, der Zähler 10, die Multiplikationseinrichtung 12, die Summierschaltungen 16, 17, die Quadrierschaltungen 18, 20, die Summierschaltung 21, die Tiefpässe 23, 24 und der Rechner 25 bilden eine an sich bekannte early/late-Regelschleife. Zur Realisierung dieser Regelschleife wird – zusätzlich zu den oben genannten Massnahmen – wie aus der zitierten GPS-Literaturstelle bekannt das vom Taktgenerator 9 abgegebene Taktsignal periodisch (Taktfrequenz 125 Hz) um jeweils einen Takt vor- und zurückgestellt. Dies wird von dem Rechner gesteuert.

Für die early/late-Regelschleife gilt hinsichtlich der Darstellung des Blockschaltbildes in der Fig. 2 dasselbe wie für die Costas-Regelschleife, dass nämlich die Taktsignale, die sich aus der beschriebenen Funktion zwingend ergeben, nicht dargestellt sind, da eine solche Ergänzung fachmännisches Wissen ist.

Ebenfalls fachmännisches Wissen ist es, wie die einzelnen Baugruppen realisiert werden. So kann beispielsweise die Multiplikationsschaltung 5 eine Exklusiv-Oder-Schaltung sein. Die Abtastschaltung 6 ist in besonders vorteilhafter Weise als JK-Flip-Flop realisiert, das den notwendigen Takt von dem Taktgenerator 9 erhält. Es ist weiterhin möglich – da an zahlreichen Stellen Zahlenwerte verarbeitet werden – einige der erwähnten Baugruppen durch einen Rechner zu realisieren.

In der obigen Beschreibung war jeweils von einem PRC die Rede. Bei dem GPS ist jedem Satelliten (dies sind die Sendestationen) ein spezieller PRC zugeordnet. Zur Navigation ist es erforderlich, gleichzeitig oder zumindest kurz nacheinander die Entfernungen zu mehreren Satelliten zu messen. Dies kann bei dem neuen Empfänger in vorteilhafter Weise im Zeitmultiplex erfolgen. Hierzu ist es notwendig, dass im Empfänger die PRC für die gewünschten Satelliten gespeichert sind. Nach jeweils einer Millisekunde wird vom einen zum nächsten PRC umgeschaltet und es werden während dieser Zeiten jeweils die oben beschriebenen Regelungen durchgeführt. Das Einrasten der Regelkreise auf alle gewünschten Satelliten bleibt erhalten und die Datendemodulation der von allen Satelliten empfangenen Signale ist ohne Unterbrechung möglich.

## Patentansprüche

1. Empfänger für modulierte bandgespreizte Trägersignale, in dem eine Synchronisation des im Empfänger gespeicherten Kodes, der sendeseitig zur Bandspreizung verwendet wird, auf den Bandspreizungskode des empfangenen Signals erfolgt, in dem die Modulation des empfangenen Signals zurückgewonnen wird, und der Regelschleifen enthält, in denen zur Regelung I- und Q-Anteile des modulierten Trägersignals erzeugt werden, dadurch gekennzeichnet, dass Mittel vorgesehen sind, derart, dass das empfangene Signal digitalisiert (4) wird, und zwar dergestalt, dass abhängig davon, ob das zu digitalisierende Signal einen Schwellwert über- oder unterschreitet, das digitale Signal einen ersten oder einen zweiten Wert aufweist, dass das digitale Signal mit dem im Empfänger gespeicherten (7) Kode multipliziert (5) wird, dass das durch die Multiplikation erzeugte Signal abgetastet (6) wird, dass die durch Abtasten erzeugten Signale einem Zähler zugeführt werden, dass aus den Zählerständen eine erste Summe $I = -Z(0) + 2Z(\pi) - Z(2\pi)$

und eine zweite Summe $Q = -Z(0) + 2Z\left(\dfrac{\pi}{2}\right)$
$-2Z\left(\dfrac{3\pi}{2}\right) + Z(2\pi)$ oder Summen, die gleich einem Vielfachen oder Bruchteil hiervon sind, gebildet werden, wobei die Summanden jeweils die Zählerstände zu den in den Klammern angegebenen Zeitpunkten mit $2\pi$ gleich Periode des zu digitalisierenden Signals sind, und dass die zeitlichen Folgen der beiden Summen die I- und Q-Anteile sind, und dass diese zur Regelung weiterverarbeitet werden.

2. Empfänger nach Anspruch 1, dadurch gekennzeichnet, dass die digitalen Signale aus den Werten «0» und «1» oder «+1» und «−1» bestehen.

3. Empfänger nach Anspruch 1 oder 2, dadurch gekennzeichnet, dass das empfangene modulierte Trägersignal vor seiner Digitalisierung in die ZF-Lage umgesetzt wird.

4. Empfänger nach einem der Ansprüche 1 bis 3, dadurch gekennzeichnet, dass der Zähler periodisch zurückgestellt wird.

5. Empfänger nach einem der Ansprüche 3 oder 4, dadurch gekennzeichnet, dass die Zählerausgangswerte mit gegeneinander um eine viertel Periode des ZF-Signals verschobenen Impulsfolgen, die aus den Werten «+1» und «−1» bestehen, multipliziert (12, 13) werden.

6. Empfänger nach einem der Ansprüche 1 bis 5, dadurch gekennzeichnet, dass die Abtastschaltung (6) ein JK-Flip-Flop ist.

## Revendications

1. Récepteur de signaux porteurs à modulation à bande étalée, dans lequel le code enregistré dans le récepteur qui est employé par l'émetteur pour les besoins de l'étalement de bande est synchronisé avec le code d'étalement de bande du signal reçu, dans lequel la modulation du signal reçu est recouvrée et qui comprend des boucles de commande dans lesquelles des composantes I et Q du signal porteur modulé sont produites à des fins de commande, caractérisé en ce que sont prévus des moyens par lesquels le signal reçu est numérisé (4) de telle sorte que le signal numérique possède une première ou une seconde valeur, selon que le signal à numériser excède ou n'atteint pas une valeur de seuil, en ce que le signal numérique est multiplié (5) par le code enregistré (7) dans le récepteur, en ce que le signal produit en tant que produit du processus de multiplication est échantillonné (6), en ce que les signaux produits par le processus d'échantillonnage sont fournis à un compteur et en ce que sont formées une première somme $I = -Z(0) + 2Z(\pi) - Z(2\pi)$ et une deuxième somme $Q = -Z(0) + 2Z\left(\dfrac{\pi}{2}\right) - 2Z\left(\dfrac{3\pi}{2}\right) + Z(2\pi)$, ou des sommes qui sont égales à un multiple ou une fraction de celles-ci, dont les termes à additionner sont les valeurs de comptage respectives aux instants indiqués entre parenthèses, $2\pi$ étant égal à la période du signal à numériser, en ce que la séquence temporelle des deux sommes constituent les composantes I et Q et en ce qu'elles sont ensuite traitées à des fins de commande.

2. Récepteur conforme à la revendication 1, caractérisé en ce que les signaux numériques consistent en valeurs «0» et «1», ou en valeurs «+1» et «−1».

3. Récepteur conforme à la revendication 1 ou 2, caractérisé en ce que le signal porteur modulé reçu est converti en valeurs à fréquence intermédiaire, avant d'être numérisé.

4. Récepteur conforme à l'une des revendications 1 à 3, caractérisé en ce que le compteur est périodiquement remis en position initiale.

5. Récepteur conforme à la revendication 3 ou 4, caractérisé en ce que les valeurs de sortie du compteur sont multipliées (12, 13) par des séquences d'impulsions qui consistent en valeurs «+1» et «−1» et sont décalées d'un quart de période du signal à fréquence intermédiaire, l'une par rapport à l'autre.

6. Récepteur conforme à l'une des revendications 1 à 5, caractérisé en ce que le circuit d'échantillonnage (6) est une bascule J-K.

## Claims

1. Receiver for modulated bandspread carrier signals wherein the code stored in the receiver, which is employed at the transmitting end for bandspreading purposes, is synchronized with the bandspreading code of the received signal, wherein the modulation of the received signal is recovered, and wherein control loops produce I and Q components of the modulated carrier signal for control purposes, characterized in that means are provided such that the received signal is digitized (4) in such a way that the digital signal has a first or a second value depending upon whether the signal to be digitized exceeds or is less than a threshold value, that the digital signal is multiplied (5) by the code stored (7) in the receiver, that the signal resulting from the multiplication is sampled (6), that the signals resulting from the sampling process are fed to a counter, that a first sum $I = -Z(0) + 2Z(\pi) - Z(2\pi)$ and a second

$$\text{sum } Q = -Z(0) + 2Z\left(\frac{\pi}{2}\right) - 2Z\left(\frac{3\pi}{2}\right) + Z$$

$(2\pi)$ or sums equal to a multiple or fraction thereof are formed, with the addends being the respective counts at the instants given in parentheses, where $2\pi$ is equal to the period of the signal to be digitized, that the time sequences of the two sums are the I and Q components, and that the latter are further processed for control purposes.

2. A receiver as claimed in claim 1, characterized in that the digital signals consist of the values «0» and «1» or «+1» and «−1».

3. A receiver as claimed in claim 1 or 2, characterized in that the received modulated carrier signal is converted to the IF value prior to being digitized.

4. A receiver as claimed in any of claims 1 to 3, characterized in that the counter is periodically reset.

5. A receiver as claimed in claim 3 or 4, characterized in that the counter output values are multiplied (12, 13) by pulse sequences which consist of the values «+1» and «−1» and are shifted a quarter period of the IF signal relative to each other.

6. A receiver as claimed in any of claims 1 to 5, characterized in that the sampling circuit (6) is a J-K flip-flop.

- 1/3 -

**Amplitude**

**Fig.1a**

Trägerschwingung
( 1GHz )

**Amplitude**

**Fig.1b**

Pseudostatistischer Kode(PRC)
( Takt 1MHz )

**Amplitude**

**Fig.1c**

Trägersignal

1

HF - Teil 2

ZF - Teil 3

5kHz 4
Digitalisierung

Multiplikation 5
PRC

Abtasten 6

Zähler 10

Multiplikation 12
I

Σ 1 16

Quadrieren 18

Auswerteeinrichtung
(Daten)

Multiplikation 19

Speicher 7

: 2 8

Taktgenerator 9

Multiplikation 13
Q

Σ 2 17

Quadrieren 20

Summieren 21

$\frac{\pi}{2}$ 14

22

TP 23    TP 24

5kHz
Taktgenerator 15

TP 32

Rechner 25

Auswerteeinrichtung
(Entfernungsmessung)

Fig.2

9

- 2/3 -

- 3/3 -

Amplitude

moduliertes Trägersignal
in ZF-Lage

t

Fig.3a

Amplitude

digitalisiertes Signal
(erzeugt ausmoduliertem
Trägersignal plus Rauschen)

Fig.3b

Amplitude

abgetastetes
Signal

t

Fig.3c

Zählerstand

Fig.3d

$\frac{\pi}{2}$    $\pi$    $\frac{3\pi}{2}$    $2\pi$    t